Europäisches Patentamt

European Patent Office

Office européen des brevets

(19)

(11) Veröffentlichungsnummer: **0 189 528 B1**

# EUROPÄISCHE PATENTSCHRIFT

(12)

(45) Veröffentlichungstag der Patentschrift: 26.06.91

(51) Int. Cl.⁵: **B23B 31/16**

(21) Anmeldenummer: 85113558.2

(22) Anmeldetag: 25.10.85

(54) Spannfutter für Werkzeugmaschinen.

(30) Priorität: 17.01.85 DE 3501325

(43) Veröffentlichungstag der Anmeldung:
06.08.86 Patentblatt 86/32

(45) Bekanntmachung des Hinweises auf die
Patenterteilung:
26.06.91 Patentblatt 91/26

(84) Benannte Vertragsstaaten:
DE FR GB IT

(56) Entgegenhaltungen:
DE-B- 2 104 904
DE-B- 2 610 587
DE-B- 2 813 832

MACHINERY AND PRODUCTION ENGINEE-
RING, Band 142, Nr. 3653, Juli 1984, Seiten
24,25,27, Silver End, GB

TOOLING & PRODUCTION, Band 50, Nr. 1,
April 1984, Seiten 51,52, Solon, Ohio, US

(73) Patentinhaber: SMW Schneider & Weisshaupt
GmbH
Wiesentalstrasse 28
W-7996 Meckenbeuren(DE)

(72) Erfinder: Hiestand, Karl
Mühlweg 2
W-7798 Pfullendorf(DE)

(74) Vertreter: Engelhardt, Guido, Dipl.-Ing.
Patentanwalt Montafonstrasse 35 Postfach
1350
W-7990 Friedrichshafen 1(DE)

## Beschreibung

Die Erfindung bezieht sich auf ein Spannfutter mit zugehöriger Palette für Werkzeugmaschinen, auf dessen im Futterkörper radial verstellbaren Grundbacken auswechselbar Aufsatzbacken gehalten sind, die mittels einer Palette zuführbar und auf die Grundbacken aufsetzbar sind, wobei jede Grundbacke auf der der Aufsatzbacke zugekehrten Stirnseite mit einem Ansatz und jede Aufsatzbacke mit einer diesem zugeordneten, zumindest auf einer Längsseite seitlich offenen Freisparung versehen sind, daß in Spannstellung der Aufsatzbacken diese jeweils mittels eines axial begrenzt verstellbaren Haltegliedes mit den Grundbacken verriegelbar sind, wobei die Ansätze der Grundbacken und die die Ansätze aufnehmenden Freisparungen im Querschnitt T- oder L-förmig ausgebildet sind, die Ansätze und die Freisparungen äußere und innere Flächen sowie zwischen diesen angeordnete achssenkrechte Anlageflächen aufweisen und das Halteglied zentrisch zu den Ansätzen der Grundbacken in diesen angeordnet und in eine in die Aufsatzbacken in deren den Grundbacken zugekehrte Stirnfläche vorgesehene Ausnehmung einrastbar ist.

Durch die DE-B-26 10 587 ist ein Spannfutter dieser Art bekannt. Zum Auswechseln der Aufsatzbacken ist hierbei eine Wechselvorrichtung erforderlich, die an das Spannfutter in axialer Richtung anzusetzen und mit drei Schiebern versehen ist, deren Mitnehmer jeweils eine von der Grundbacke abzunehmende Aufsatzbacke und eine in Führungsnuten angeordnete Aufsatzbacke umgreifen. Zum Antrieb der tangential zu einem angenommenen konzentrisch zur Futterachse verlaufenden Grundkreis verstellbaren Schieber ist ein doppelt wirkender Hydraulikzylinder vorgesehen, dessen Kolbenstange an einem der drei Schieber, die über ein Zahnrad mechanisch miteinander verbunden sind, eingreift. Obwohl die durch eine tangential zur Futterdrehachse vorzunehmende Verstellbewegung verschiebbaren Aufsatzbacken eines Spannfutters somit gemeinsam gewechselt werden können, ist der Bauaufwand der gesonderten Wechselvorrichtung, zumal durch diese auch die Verriegelungen zu lösen sind, außerordentlich groß, zur Automation des Backenwechsels an Werkzeugmaschinen ist diese auch groß bauende Vorrichtung nicht geeignet.

Des weiteren ist durch die DE-C-28 13 832 ein Backenfutter, auf dessen im Futterkörper verstellbar geführten Grundbacken auswechselbar Aufsatzbacken angeordnet sind, bekannt. Die Aufsatzbacken sind bei dieser Ausgestaltung auf Schwalbenschwanzführungen mit quer zur Verstellrichtung liegenden als zur Längsachse des Futterkörpers konzentrische Kegelflächensegmente ausgebildeten Führungsflächen geführt, zwischen denen ein freies Steckspiel vorgesehen ist. Außerdem ist zur spielfreien Festlegung der Aufsatzbacken an den Grundbacken eine Spann- und Fixiereinrichtung erforderlich, die ein mit einer Ausrichtfläche zusammenwirkendes Ausrichtglied, das in einer Ausnehmung der Grundbacke verschiebbar geführt und mit seinem als Kegelbolzen ausgebildeten Ende durch die Kraft einer Feder gegen die Aufsatzbacke preßbar ist, und ein in die Aufsatzbacken verschiebbares Verriegelungsglied aufweist. Durch eine Verstellung der Grundbacken werden das Ausrichtglied und auch das Verriegelungsglied über einen Stelltrieb betätigt.

Bei diesem Backenfutter können die Aufsatzbacken zwar sowohl für das Innenspannen als auch für das Außenspannen automatisch gewechselt werden, der Bauaufwand ist aber außerordentlich groß. Vor allem aber ist von Nachteil, daß die Aufsatzbacken nur durch die Kraft einer Druckfeder, die an dem Grundbacken und dem Ausrichtglied abgestützt ist, mit den Grundbacken verspannt werden und somit eine zufriedenstellende Halterung nicht gegeben ist. Außerdem können die Aufsatzbacken durch auf diese einwirkende Kippkräfte leicht von kegelig ausgebildeten Anlageflächen der Grundbacken abgezogen werden.

Aufgabe der Erfindung ist es daher, ein Spannfutter der vorgenannten Art zu schaffen, mittels dem ein Wechsel der Aufsatzbacken leicht und in kurzer Zeit zu bewerkstelligen ist, und zwar mit Hilfe von Bewegungen, die mit der das Spannfutter tragenden Werkzeugmaschine vorzunehmen sind. Außerdem soll eine sichere Abstützung der Aufsatzbacken bei hoher Stabilität gegeben sein, so daß auch große Kräfte, ohne daß Beschädigungen auftreten, aufgenommen werden können. Des weiteren sollen nur wenige Bauteile, die ohne Schwierigkeiten wirtschaftlich zu fertigen sind, erforderlich sein, um auf einfache Weise eine starre Verbindung zwischen einem Aufsatzbacken und einem Grundbacken sowohl für eine Innenspannung als auch für eine Außenspannung zu ermöglichen.

Gemäß der Erfindung wird dies bei einem Spannfutter der eingangs genannten Gattung dadurch erreicht,

a) daß die inneren und äußeren Flächen der Ansätze und der Freisparungen kreiszylindrisch zur Längsachse des Futterkörpers ausgebildet sind,

b) daß die achssenkrechten Anlageflächen der Ansätze und der Freisparungen konzentrisch zu der Längsachse des Futterkörpers verlaufen,

c) daß das Halteglied und/oder die dieses aufnehmende Ausnehmung der Aufsatzbacken mit Einführschrägen versehen sind,

d) daß die die Aufsatzbacken tragende Palette konzentrisch in dem Futterkörper des Spannfutters gehalten ist,

e) daß die Aufsatzbacken durch eine Relativdrehung zwischen dem Futterkörper und der Palette auf die Grundbacken aufrastbar sind und

f) daß zur Fixierung der Endstellung zwischen dem Futterkörper und der Palette mindestens ein Anschlag vorgesehen ist.

In einer einfachen Ausgestaltung kann das Halteglied aus einem entgegen der Kraft einer Feder verschiebbar in einer zentrisch in den Grundbacken eingearbeiteten Bohrung eingesetzten Rastbolzen und einem an dessen freiem Ende angebrachten, vorzugsweise rechteckigen Nutenstein gebildet sein, der in einer Ausnehmung der Grundbacken drehfest gehalten und in die als Aufnahmenut ausgebildete Ausnehmung der Aufsatzbacke einführbar ist. Es ist aber auch möglich, das Halteglied aus einem doppelseitig von Druckmittel beaufschlagbaren in einer zentrisch in die Grundbacke eingearbeiteten Bohrung eingesetzten Kolben und einem an dessen Kolbenstange angebrachten, vorzugsweise rechteckigen Nutenstein zu bilden, der in einer Aufnahme der Grundbacke drehfest gehalten und in die als Aufnahmenut ausgebildete Ausnehmung der Aufsatzbacke einführbar ist. Die Nutensteine und/oder die diese aufnehmenden Ausnehmungen der Aufsatzbacken sollten, um das Einsetzen zu erleichtern, mit vorzugsweise an deren Längsseiten angearbeiteten Einführschrägen versehen sein.

Damit eine ausreichende flächige seitliche Abstützung der Aufsatzbacken gewährleistet ist, sollten des weiteren die Nutensteine in ihrer Höhe nahezu der lichten Weite der in den Aufsatzbacken eingearbeiteten Freisparungen entsprechen. Durch die Ausbildung der Nutensteine in Form eines Keiles wird erreicht, daß die Aufsatzbacken stets sicher auf den Grundbacken gehalten sind. Die Aufsatzbacken können somit weder in Umfangsrichtung aus den Freisparungen der Grundbacken herausgedreht werden noch werden sie um deren Längsachse um das gegebene Passungsspiel verdreht.

Ferner ist es angebracht, den zur Einstellung der Relativdrehung zwischen dem Futterkörper und der Palette vorgesehenen Anschlag durch eine oder mehrere in eines dieser Bauteile, vorzugsweise in den Futterkörper, eingearbeitete und konzentrisch zu dessen Längsachse verlaufende Nuten und von dem anderen Bauteil abstehende in die Nuten eingreifende Bolzen zu bilden, wobei diese an ihrer Spitze mit einer vorzugsweise kegelförmig ausgebildeten Einführschräge ausgestattet sein sollten.

Zweckmäßig ist es auch, um die Aufsatzbacken leicht von der Palette entnehmen zu können, in dieser Federrasten anzuordnen, durch die die Aufsatzbacken abnehmbar gehalten sind.

Das gemäß der Erfindung ausgebildete Spannfutter ermöglicht es nicht nur, in kurzer Zeit einen Wechsel der Aufsatzbacken unter Ausnutzung der von der das Spannfutter tragenden Werkzeugmaschine ausführbaren Maschinenbewegungen vorzunehmen, sondern dieses ist auch einfach in seiner konstruktiven Ausgestaltung und somit auf wirtschaftliche Weise zu fertigen. Vor allem aber ist gewährleistet, daß stets eine hohe Stabilität gegeben ist und daß auch hohe Spannkräfte übertragen werden können, ohne daß zu befürchten ist, daß die Verbindung zwischen den Aufsatzbacken und den Grundbacken beeinträchtigt wird. Aufgrund der vorgesehenen Ausgestaltung können nämlich die Aufsatzbacken, da die äußeren und inneren Stirnflächen der ineinandergreifenden Teile konzentrisch zur Längsachse des Futterkörpers ausgebildet sind, durch eine Relativdrehung zwischen diesem und der Palette auf die Grundbacken aufgesetzt und mittels des Haltegliedes drehfest mit diesen verriegelt werden. Bei einfacher Handhabung ist somit ein Backenwechsel in kurzer Zeit problemlos möglich, wobei die Verdrehung des Fuitterkörpers und/oder der zentrisch zu diesem zuzuführenden Palette leicht einstellbar sind.

Da die Aufsatzbacken unmittelbar an den Ansätzen der Grundbacken abgestützt sind, treten nur sehr geringe Kippmomente auf, durch die die hakenförmige Verbindung nicht beeinträchtigt wird. Und da der Ansatz der Grundbacken unmittelbar in die Aufsatzbacken eingreift, ist auch eine hohe Stabilität gegeben, zumal die Abstützung der Aufsatzbacken im Grunde des Ansatzes der Grundbacken erfolgt. Außerdem können die zusammenwirkenden Flächen, da diese konzentrisch zur Futterachse verlaufen, ohne Schwierigkeiten exakt bearbeitet werden.

In der Zeichnung sind zwei Ausführungsbeispiele des gemäß der Erfindung ausgebildeten Spannfutters für Werkzeugmaschinen dargestellt, die nachfolgend im einzelnen erläutert sind. Hierbei zeigen:

Fig. 1 einen mit Grundbacken bestückten Futterkörper, eines Spannfutters, teilweise in einem Axialschnitt,

Fig. 2 eine Palette, in die die auf die Grundbacken des Spannfutters nach Fig. 1 aufsetzbaren Aufsatzbacken gehalten sind, ebenfalls im Axialschnitt,

Fig. 3 eine Draufsicht auf einen der Aufsatzbacken nach Fig. 2 in Pfeilrichtung P,

Fig. 4 den Futterkörper des Spannfutters nach Fig. 1 in Vorderansicht,

Fig. 5 den Futterkörper des Spannfutters nach Fig. 1 mit aufgesetzten Aufsatzbacken,

Fig. 6 eine andersartige Ausbildung eines Grundbackens bei dem Spannfutter nach Fig. 1, in einem Axialschnitt und

Fig. 7 den dem Grundbacken nach Fig. 6 zugeordneten in einer Palette gehaltenen Aufsatzbacken, ebenfalls teilweise geschnitten.

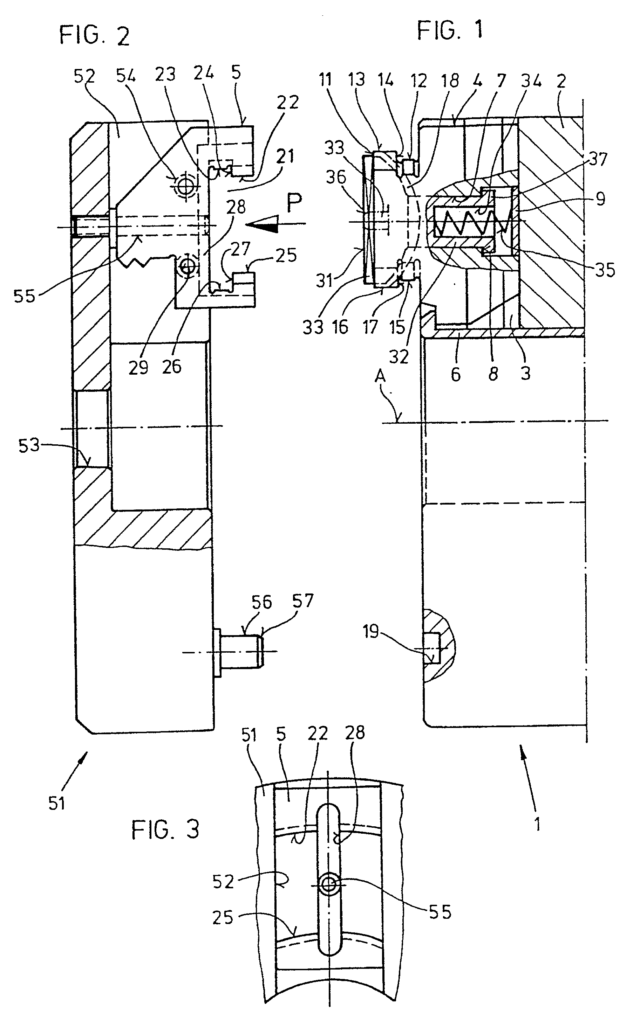

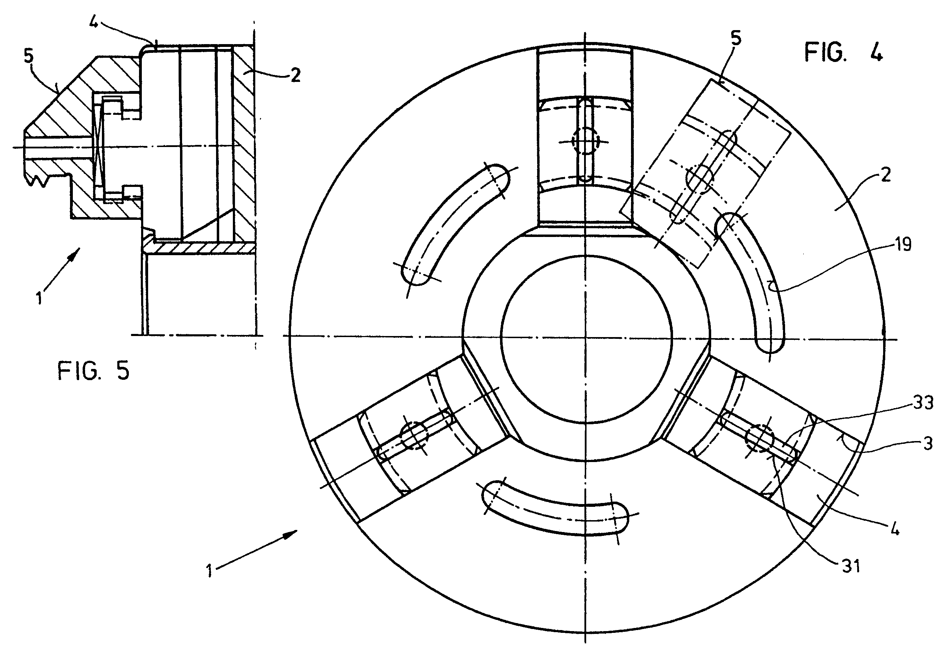

Das in den Fig. 1, 4, 5 und 6 dargestellte und jeweils mit 1 bezeichnete Spannfutter für Werkzeugmaschinen weist einen Futterkörper 2 auf, in den gleichmäßig über den Umfang verteilt radial gerichtete Nuten 3 eingearbeitet sind, in denen in beliebiger Weise verstellbare Grundbacken 4 eingesetzt sind. Zum Einspannen eines zu bearbeitenden Werkstückes mittels des Spannfutters 1 sind auf den gleichmäßig über den Umfang verteilt angeordnete Grundbacken 4, wie dies in Fig. 5 gezeigt ist, Aufsatzbacken 5 auswechselbar gehalten. Durch eine in den Futterkörper 2 eingesetzte Büchse 6 sind die Nuten 3 innen abgeschlossen.

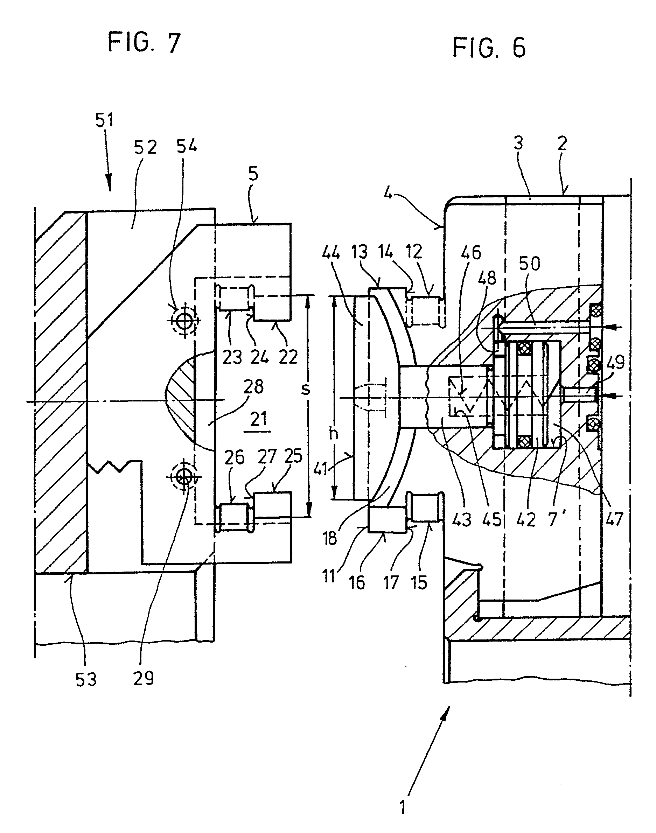

Zur Halterung der Aufsatzbacken 5 auf den Grundbacken 4 sind diese auf der den Aufsatzbacken 5 zugekehrten Stirnseite mit einem im Querschnitt T-förmig ausgebildeten Ansatz 11 versehen und die Aufsatzbacken 5 weisen jeweils eine den Ansätzen 11 zugeordnete seitlich offene Freisparung 21 auf, in die Ansätze 11 bei einem Wechsel der Aufsatzbacken 5 durch eine Relativdrehung zwischen dem Futterkörper 2 und einer Palette 51, in denen die Aufsatzbacken 5 satzweise gehalten sind, eingeführt werden können. Und in Spannstellung der Aufsatzbacken 5 sind diese mittels eines in den Fig. 1 bis 5 mit 31 und in den Fig. 6 und 7 mit 41 bezeichneten Haltegliedes mit den Grundbacken 4 fest verriegelt.

Die äußeren gegeneinander versetzten radial nach außen gerichteten Flächen 12 und 13 sowie die radial nach innen gerichteten Flächen 15 und 16 wie auch die zwischen diesen angeordneten achssenkrechten Anlageflächen 14 und 17 der Ansätze 11 sind konzentrisch zur Längsachse A des Futterkörpers 2 gekrümmt ausgebildet; in gleicher Weise sind auch die einander gegenüberliegenden ebenfalls radial nach innen bzw. außen gerichteten abgesetzten Flächen 22 und 23 sowie 25 und 26 und auch die zwischen diesen angeordneten achssenkrechten Anlageflächen 24 und 27 der Freisparungen 21 gestaltet, wobei selbstverständlich ein entsprechendes Passungsspiel vorgesehen ist, so daß die Ansätze 11 der Grundbacken 4 leicht in die seitlich offenen Freisparungen 21 der Aufsatzbacken 5 eingeführt werden können.

Die dem Futterkörper 2 zuzuführenden Aufsatzbacken 5 sind lagegerecht in in die mit einer Aufnahmebohrung 53 für ein Zuführglied versehenen Palette 51 eingearbeiteten radial gerichteten Nuten 52 abnehmbar gehalten. Dazu dienen Federrasten 54, die in seitlich in die Aufsatzbacken 5 eingearbeitete Rastbohrungen 29 eingreifen. Bei dem Ausführungsbeispiel nach Fig. 2 sind die Aufsatzbacken 5 zusätzlich noch auf einem in die Nuten 52 hineinragenden Stift 55 aufgesteckt.

In Spannstellung sind die Aufsatzbacken 5 mit Hilfe eines axial begrenzt verschiebbaren Haltegliedes 31 bzw. 41 mit den Grundbacken 4 verriegelt. Um dies zu ermöglichen, greift das Halteglied 31 bzw. 41 in eine radial gerichtete in die den Grundbacken 5 zugekehrte Stirnfläche der Freisparung 21 der Aufsatzbacken 5 eingearbeitete Aufnahmenut 28 ein.

Bei dem Ausführungsbeispiel nach Fig. 1 besteht das Halteglied 31 aus einem in eine zentrisch in den Grundbacken 4 eingearbeitete Bohrung 7 eingesetzten Rastbolzen 32 und einem an dessen freien Ende angebrachten rechteckig ausgebildeten Nutenstein 33, der an den beiden Längsseiten mit Einführschrägen 36 versehen und somit leicht in die Aufnahmenut 28 der Aufsatzbacken 5 einführbar ist. Dazu dient eine auf den Rastbolzen 32 einwirkende Druckfeder 35, die in eine in diesen eingearbeitete Bohrung 34 eingesetzt ist und sich an diesem sowie einem die Bohrung 7 verschließenden Einsatzstück 9 abstützt. Die Bohrung 7 ist hierbei abgesetzt, so daß eine Anschlagfläche 8 gebildet ist, an der sich der Rastbolzen 32 mit einem angeformten Bund 37 anlegt. Ein Herausfallen des Haltegliedes 31 ist somit verhindert. Außerdem ist der Nutenstein 32 des Haltegliedes 31 in einer in den Grundbacken 4 eingearbeiteten Ausnehmung 18 verdrehfest gehalten.

Bei dem Ausführungsbeispiel nach Fig. 6 besteht das Halteglied 41 aus einem in die Bohrung 7' des Grundbackens 4 eingesetzten, beidseitig von Druckmittel beaufschlagbaren Kolben 42 und einem an dessen Kolbenstange 43 angeformten Nutenstein 44, der in der Ausnehmung 18 des Grundbackens 4 gehalten ist und in Spannstellung in die Aufnahmenut 28 der Aufsatzbacke 5 eingreift. Die Höhe h des Nutensteines 44 ist hierbei nur geringfügig kleiner bemessen als die lichte Weite s der Freisparung 21 der Aufsatzbacke 5, so daß auch hohe seitlich gerichtete Kräfte sicher aufgenommen werden können und ein Verdrehen der Aufsatzbacken 5 auch um die Achse der Grundbacken 4 somit ausgeschlossen ist.

Dem Kolben 42 sind zwei Druckräume 47 und 48 zugeordnet, denen Druckmittel wechselseitig über in den Grundbacken 4 eingearbeitete Druckmittelkanäle 49 bzw. 50 zugeführt werden kann. Außerdem ist in eine in den Kolben 43 eingearbeitete Bohrung 45 eine Druckfeder 46 eingesetzt, die sich an diesem und dem Grundbacken 4 abstützt, so daß das Halteglied 41, sofern in dem Druckraum 48 kein Druck aufgebaut ist, die in Fig. 6 dargestellte Lage einnimmt.

Um die in der Palette 51 satzweise abnehmbar gehaltenen Aufsatzbacken 5 auf die Grundbacken 4 des Spannfutters 1 aufzusetzen, ist lediglich die Palette 51 fluchtend zu dem Futterkörper 2, aber wie dies in Fig. 4 strichpunktiert eingezeichnet ist, geringfügig gegenüber der Endlage verdreht axial derart zu verschieben, daß sich die Nutensteine 33 bzw. 44 an der Stirnfläche der Palette 51 anlegen und entgegen der Kraft der Feder 35 bzw. 46 in die Ansätze 11 zurückgedrückt werden. Sodann ist eine Drehbewegung um die Längsachse A vorzunehmen, wobei der Futterkörper 2 und/oder die Palette 51 gedreht werden können, um die Ansätze 11 der Grundbacken 4 in die Freisparungen 21 der Aufsatzbacken 5 einzuführen. Sobald sich diese in Spannstellung befinden, rasten die Nutensteine 33 bzw. 44 selbsttätig in den zugeordneten Aufnahmenuten 28 ein - bei dem Ausführungsbeispiel nach den Fig. 1 bis 5 erst während der Abnahme der Aufsatzbacken 5 von der Palette 51, da die Halteglieder 31 durch die Stifte 55 zunächst zurückgehalten werden -,so daß eine betriebssichere Verriegelung der Aufsatzbacken 5 auf den Grundbacken 4 gewährleistet ist. Bei dem Ausführungsbeispiel nach Fig. 6 kann nunmehr dem Druckraum 47 Druckmittel zugeführt und dort ein entsprechender Druck aufgebaut werden, um ein Lösen des Haltegliedes 41 auszuschließen. Bei einer nachfolgenden Axialbewegung der Palette 51 von dem Futterkörper 2 weg rasten die Federrasten 54 aus, die Aufsatzbacken 5 werden demnach von der Palette 51 selbsttätig abgenommen.

Um auf einfache Weise den Verdrehweg zwischen der Palette 51 und dem Futterkörper 2 einstellen zu können, sind in dessen Stirnfläche eine oder mehrere konzentrisch zur Längsachse A des Futterkörpers 2 verlaufender Nuten 19 vorgesehen und an der Palette 51 sind diesen zugeordnete mit einer Einführschräge 57 ausgestattete Bolzen 56 angebracht. Bei der Zustellbewegung der Palette 51 greifen die Bolzen 56 somit in die Nuten 19 ein, die Endstellung der Relativdrehung zwischen dem Futterkörper 2 und der Palette 51 ist auf diese Weise ohne Schwierigkeiten zu fixieren. Werden die Freisparungen 21 der Aufsatzbacken 5 nur an einer Längsseite offen ausgebildet, kann die Verdrehbewegung durch Anlegen der Ansätze 11 an den Aufsatzbacken 5 begrenzt werden.

Sollen die aufgesetzten Aufsatzbacken 5 zum Einspannen eines andersartigen Werkstückes gewechselt werden, so ist die leere Palette 51 axial derart dem Futterkörper 2 zuzuführen, daß die Aufsatzbacken 5 in die radial gerichteten Nuten 52 eingreifen und die Federrasten 54 in deren Rastbohrungen 29 einrasten können. Bei dem Ausführungsbeispiel nach Fig. 2 werden dabei durch die Stifte 55 die Halteglieder 31 entgegen der Kraft der Federn 35 derart zurückgedrückt, daß die Nutensteine 33 aus den Aufnahmenuten 28 ausrasten und durch eine Drehung die Aufsatzbacken 5 von den Grundbacken 4 gelöst werden können. Bei dem Ausführungsbeispiel nach Fig. 6 sind zu dem gleichen Zweck, um die Rück-führung der Halteglieder 41 vorzunehmen, die Kolben 42 durch Einbringung von Druckmittel in die Druckräume 48 derart zu beaufschlagen, daß sich diese an den Grundbacken 4 anlegen und die Nutensteine 44 somit nicht mehr in die Aufnahmenuten 28 eingreifen, so daß durch eine Relativdrehung zwischen der Palette 51 und dem Futterkörper 2 die Aufsatzbacken 5 ebenfalls von den Grundbacken 4 abgenommen werden können.

## Ansprüche

1. Spannfutter (1) mit zugehöriger Palette (51) für Werkzeugmaschinen, auf dessen im Futterkörper (2) radial verstellbaren Grundbacken (4) auswechselbar Aufsatzbacken (5) gehalten sind, die mittels einer Palette (51) zuführbar und auf die Grundbacken (4) aufsetzbar sind, wobei jede Grundbacke (4) auf der der Aufsatzbacke (5) zugekehrten Stirnseite mit einem Ansatz (11) und jede Aufsatzbacke (5) mit einer diesem zugeordneten, zu-mindest auf einer Längsseite seitlich offenen Freisparung (21) versehen sind, daß in Spannstellung der Aufsatzbacken (5) diese jeweils mittels eines axial begrenzt verstellbaren Haltegliedes (31) mit den Grundbacken (4) verriegelbar sind, wobei die Ansätze (11) der Grundbacken (4) und die die Ansätze (11) aufnehmenden Freisparungen (21) im Querschnitt T- oder L-förmig ausgebildet sind, die Ansätze (11) und die Freisparungen (21) äußere und innere Flächen (12, 13, 15, 16 bzw. 22, 23, 25, 26) sowie zwischen diesen angeordnete achssenkrechte Anlageflächen (14, 17 bzw. 24, 27) aufweisen und das Halteglied (31) zentrisch zu den Ansätzen (11) der Grundbacken (4) in diesen angeordnet und in eine in die Aufsatzbacken (5) in deren den Grundbacken (4) zugekehrte Stirnfläche vorgesehen Ausnehmung (28) einrastbar ist,

   **dadurch gekennzeichnet,**
   a) daß die inneren und äußeren Flächen (12, 13, 15, 16 bzw. 22, 23, 25, 26) der Ansätze (11) und der Freisparungen (21) kreiszylindrisch zur Längsachse (A) des Futterkörpers (2) ausgebildet sind,
   b) daß die achssenkrechten Anlageflächen (14, 17 bzw. 24, 27) der Ansätze (11) und der Freisparungen (21) konzentrisch zu der Längsachse des Futterkörpers (2) verlaufen,
   c) daß das Halteglied (31) und/oder die dieses aufnehmende Ausnehmung (28) der Aufsatzbacken (5) mit Einführschrägen (36) versehen sind,
   d) daß die die Aufsatzbacken (5) tragende Palette (51) konzentrisch in dem Futterkörper (2) des Spannfutters (1) gehalten ist,
e) daß die Aufsatzbacken (5) durch eine Relativdrehung zwischen dem Futterkörper (2) und der Palette (51) auf die Grundbakken (4) aufrastbar sind und
f) daß zur Fixierung der Endstellung zwischen dem Futterkörper (2) und der Palette (51) mindestens ein Anschlag (Nut 19, Bolzen 56) vorgesehen ist.

2. Spannfutter nach Anspruch 1,

   **dadurch gekennzeichnet,**

   daß das Halteglied (31) aus einem entgegen der Kraft einer Feder (35) verschiebbar in einer zentrisch in dem Grundbacken (4) eingearbeiteten Bohrung (7) eingesetzten Rastbolzen (32) und einem an dessen freiem Ende angebrachten vorzugsweise rechteckigen Nutenstein (33) gebildet ist, der in einer Ausnehmung (18) der Grundbacken (4) drehfest gehalten und in die als Aufnahmenut (28) ausgebildete Ausnehmung der Aufsatzbacke (5) einführbar ist.

3. Spannfutter nach Anspruch 1 oder 2,

   **dadurch gekennzeichnet,**

   daß das Halteglied (41) aus einem doppelseitig von Druckmittel beaufschlagbaren in einer zentrisch in die Grundbacke (4) eingearbeiteten Bohrung (7') eingesetzten Kolben (42) und einem an dessen Kolbenstange (43) angebrachten, vorzugsweise rechteckigen Nutenstein (44) gebildet ist, der in einer Aufnahme (18) der Grundbacke (4) drehfest gehalten und in die als Aufnahmenut (28) ausgebildete Ausnehmung der Aufsatzbacke (5) einführbar ist.

4. Spannfutter nach einem oder mehreren der Ansprüche 1 bis 3,

   **dadurch gekennzeichnet,**

   daß der Nutenstein (33; 44) und/oder die diese aufnehmende Ausnehmung (28) der Aufsatzbacke (5) mit vorzugsweise an deren Längsseiten angearbeiteten Einführschrägen (36) versehen sind.

5. Spannfutter nach einem oder mehreren der Ansprüche 1 bis 4,

   **dadurch gekennzeichnet,**

   daß der Nutenstein (33; 44) in seiner Höhe (h) nahezu der lichten Weite (s) der in der Aufsatzbacke (5) eingearbeiteten Freisparung (21) entspricht.

6. Spannfutter nach einem oder mehreren der Ansprüche 1 bis 5,

   **dadurch gekennzeichnet,**

   daß der zur Einstellung der Relativdrehung zwischen dem Futterkörper (2) und der Palette (51) vorgesehene Anschlag durch eine oder mehrere in eines dieser Bauteile, vorzugsweise in den Futterkörper (2), eingearbeitete und konzentrisch zu dessen Längsachse (A) verlaufende Nuten (19) und von dem anderen Bauteil (Palette 51) abstehende in die Nuten (19) eingreifende Bolzen (56) gebildet ist.

7. Spannfutter nach Anspruch 6,

   **dadurch gekennzeichnet,**

   daß die Bolzen (56) an ihrer Spitze mit einer vorzugsweise kegelförmig ausgebildeten Einführschräge (57) versehen sind.

8. Spannfutter nach einem oder mehreren der Ansprüche 1 bis 7,

   **dadurch gekennzeichnet,**

   daß die Aufsatzbacken (5) mittels Federrasten (54) abnehmbar in der Palette (51) gehalten sind.

**Claims**

1. Chuck (1) with pallet (51) for machine tools with exchangeable jaw segments (5) which locate in the radially adjustable baseplates (4) in the chuck head (2), which can be guided by a palette (51) and which can be fitted to the baseplates (4), the face of each baseplate (4) having a projection (11) on the side facing each jaw segment (5) and each jaw segment (5) having an open recess (21) on at least one longitudinal side which enables them, when clamped, to be locked in position on each baseplate (4) by means of an adjustable retaining member (31) with limited axial travel, whereby the projections (11) on the baseplates (4) and the recesses (21) in which these projections (11) locate are arranged with a T-shaped or L-shaped cross section, whereby the projections (11) and the recesses (21) all have internal and external faces (12, 13, 15, 16 and 22, 23, 25, 26 respectively) and locating faces (14, 17 and 24, 27 respectively) arranged vertically with respect to the main axis and whereby the retaining member (31) is arranged centrally with respect to the projections (11) on the baseplates (4) such that it is able to locate in the recess (28) in the end of the jaw segments (5) facing the baseplate,

**characterized in that**

a) the internal and external faces (12, 13, 15, 16 and 22, 23, 25, 26 respectively) of the projections (11) and recesses (21) are arranged cylindrically with respect to the longitudinal axis (A) of the chuck head (2),

b) the vertical support faces (14, 17 and 24, 27 respectively) of the projections (11) and the recesses (21) run concentrically around the longitudinal axis of the chuck head (2)

c) the retaining member (31) and/or the recesses (28) in the jaw segments (5) in which it locates are arranged with guide tapers (36),

d) the palette (51) which supports the jaw segments (5) is held concentrically in the head (2) of the chuck (1)

e) the jaw segments (5) can be locked onto the baseplates (4) by means of a relative turning motion between the chuck head (2) and the palette (51) and in that,

f) to secure the limit position between chuck head (2) and the palette (51), at least one stop (groove 19, bolt 56) is provided.

2. Chuck as claimed in claim 1,

**characterized in that**

the retaining member (31) is arranged as a retaining bolt (32) which can slide against the pressure of a spring (35) into a bore (7) located centrally in the baseplate (4) on the protruding end of which a grooved block (33) is arranged, preferably of rectangular shape which locates in a recess (18) in the baseplate (4), thus preventing it from turning, and into which the recess arranged as a locating groove (28) in the jaw segment (5) can locate.

3. Chuck as claimed in claim 1 or 2,

**characterized in that**

the retaining member (41) is arranged as a twin-sided piston (42) inserted in a bore (7') in the centre of the baseplate (4) and actuated by a pressure medium, having a grooved block (44) arranged on the piston rod (43), preferably of rectangular shape which locates in a recess (18) in the baseplate (4), thus preventing it from turning, and into which the recess arranged as a locating groove (28) in the jaw segment (5) can locate.

4. Chuck as claimed in one or more of claims 1 to 3,

**characterized in that**

the grooved block (33; 44) and/or the recess (28) in which the jaw segment (5) locates is provided with tapered guide faces (36), preferably arranged in their longitudinal sides.

5. Chuck as claimed in one or more of claims 1 to 4,

**characterized in that**

the height (h) of the grooved block (33; 44) is virtually equivalent to the width (s) of the recess (21) in the jaw segment (5).

6. Chuck as claimed in one or more of claims 1 to 5,

**characterized in that**

the stop provided to adjust the relative turning motion between chuck head (2) and palette (51) is arranged as one or more grooves (19) running concentrically with respect to the longitudinal axis (A) on one of these two components, preferably in the chuck head (2) and as pins (56) which protrude from the other component (palette 51) and locate in the grooves (19).

7. Chuck as claimed in claim 6,

**characterized in that**

the bevel tips of the pins (56) are arranged with guide faces (57), preferably tapering in form.

8. Chuck as claimed in one or more of claims 1 to 7,

**characterized in that**

the jaw segments (5) are detachably mounted in the palette (51) by means of spring detents (54).

**Revendications**

1. Mandrin de serrage (1) avec palette correspondante (51) pour machines-outil dont les mors de base (4) radialement déplaçables dans le corps du mandrin (2) retiennent des mors rapportés (5) échangeables qui se laissent avancer à l'aide d'une palette (51) et greffer sur les mors de base (4), chaque mors de base (4) portant un embout (11) sur la face frontale orientée vers le mors rapporté (5) et chaque mors rapporté (5) étant muni d'un évidement (21) qui est attribué au mors de base et qui, tout au moins sur un côté longitudinal, est ouvert latéralement, caractérisé en ce que, en position serrée, les mors rapportés (5) se laissent verrouiller aux mors de base (4) par un membre de retient (31) qui peut être déplacé axialement dans certaines limites, que les embouts (11) des mors de base (4) et les évidements (21) recevant les embouts (11) ont une section sous forme d'un T ou d'un L, que les embouts (11) et les évidements (21) sont conçus avec des faces extérieures et intérieures (12, 13, 15, 16 ou 22, 23, 25, 26) entre lesquelles sont disposées perpendiculairement à l'axe, des faces de portée (14, 17 ou 24, 27), le membre de retient (31) étant centré dans les embouts (11) des mors de base (4) et se laissant engrener dans un évidement (28) dans la face frontale des mors rapportés (5) orientée vers les mors de base (4),

se caractérisant par le fait que
    a) les faces intérieures et extérieures (12, 13, 15, 16 ou 22, 23, 25, 26) des embouts (11) et des évidements (21) sont conçues sous forme d'un cylindre à section circulaire autour de l'axe longitudinale du corps de mandrin (2),
    b) les faces de portée (14, 17 ou 24, 27) perpendiculaires à l'axe des embouts (11) et des évidements (21) sont concentriques par rapport à l'axe longitudinale du corps de mandrin (2),
    c) le membre de retient (31) et/ou l'évidement (28) des mors rapportés (5) logeant le membre sont équipés de rampes d'introduction (36),
    d) la palette (51) portant les mors rapportés (5) est retenue d'une manière concentrique dans le corps (2) du mandrin de serrage (1),
    e) les mors rapportés (5) se laissent encliqueter sur les mors de base (4) par une rotation relative entre le corps du mandrin (2) et la palette (51),
    f) pour la fixation de la position extrême il est prévu au moins une butée (gorge 19, boulon 56) entre le corps du mandrin (2) et la palette (51).

2. Mandrin de serrage d'après la revendication 1,

se caractérisant par le fait que

le membre de retient (31) est formé par un boulon d'encliquetage (32) inséré d'une manière déplaçable et contre la force d'un ressort (35), dans un alésage (7) centré dans le mors de base (4), et d'un coulisseau de préférence rectangulaire (33) disposé sur son extrémité libre, retenu dans un évidement (18) des mors de base (4) de sorte à empêcher toute torsion, et qui peut être inséré dans l'évidement du mors rapporté (5) conçu sous forme d'une gorge de logement.

3. Mandrin de serrage d'après la revendication 1 ou 2,

se caractérisant par le fait que

le membre de retient (41) est formé par un piston (42) inséré dans un alésage (7') centré dans le mors de base (4) et soumis de part et d'autre à l'action d'un fluide sous pression, et d'un coulisseau (44) de préférence rectangulaire et disposé sur sa tige de piston (43) et retenu dans un logement (18) du mors de base (4) de sorte à empêcher toute torsion, et qui peut être inséré dans l'évidement du mors rapporté (5) conçu sous forme d'une gorge de logement.

4. Mandrin de serrage d'après une ou plusieurs des revendications 1 à 3,

se caractérisant par le fait que

le coulisseau (33; 44) et/ou l'évidement (28) du mors rapporté (5) qui lui sert de logement sont munis de rampes d'introduction (36) prévues de préférence sur leurs côtés longitudinaux.

5. Mandrin de serrage d'après une ou plusieurs des revendications 1 à 4,

se caractérisant par le fait que

la hauteur (h) du coulisseau (33; 44) correspond à peu près au diamètre intérieur (s) de l'évidement (21) pratiqué dans le mors rapporté (5).

6. Mandrin de serrage d'après une ou plusieurs des revendications 1 à 5,

se caractérisant par le fait que

la butée prévue pour la régulation de la rotation relative entre le corps du mandrin (2) et la palette (51) est formée par une ou plusieurs gorges (19) pratiquées dans un de ces composants, de préférence dans le corps du mandrin (2), et disposées concentriquement par rapport à son axe longitudinale (A), et par des boulons (56) saillant de l'autre composant (palette 51), qui s'engrènent dans les gorges (19).

7. Mandrin de serrage d'après la revendication 6,

se caractérisant par le fait que

l'extrémité des boulons (56) est munie d'une rampe d'introduction (57) conçue de préférence sous forme d'un cône.

8. Mandrin de serrage d'après une ou plusieurs des revendications 1 à 7,

se caractérisant par le fait que

les mors rapportés démontables (5) sont retenues par des encliquetages à ressort (54) dans la palette (51).

FIG. 2

FIG. 1

FIG. 3

FIG. 5

FIG. 4

EP 0 189 528 B1

FIG. 7

FIG. 6